**Europäisches Patentamt**

**European Patent Office**

**Office européen des brevets**

(19)

(11) Veröffentlichungsnummer: **0 062 786**
**B1**

# EUROPÄISCHE PATENTSCHRIFT

(12)

(45) Veröffentlichungstag der Patentschrift:
**18.07.84**

(51) Int. Cl.³: **C 09 D 3/66**

(21) Anmeldenummer: **82102348.8**

(22) Anmeldetag: **22.03.82**

(54) **Verfahren zur Herstellung phenolharzmodifizierter Bindemittel.**

(30) Priorität: **01.04.81 AT 1513/81**
**30.06.81 AT 2897/81**

(43) Veröffentlichungstag der Anmeldung:
**20.10.82 Patentblatt 82/42**

(45) Bekanntmachung des Hinweises auf die Patenterteilung:
**18.07.84 Patentblatt 84/29**

(84) Benannte Vertragsstaaten:
**DE FR GB IT**

(56) Entgegenhaltungen:
**FR - A - 2 328 750**

(73) Patentinhaber: **Vianova Kunstharz Aktiengesellschaft,
A-8402 Werndorf (AT)**

(72) Erfinder: **Lackner, Heinrich, Dipl.-Ing., Engerthgasse 3,
A-8045 Graz (AT)**

(74) Vertreter: **Pitter, Robert, Dr. et al,
Postfach 191 Leechgasse 21, A-8011 Graz (AT)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein Verfahren zur Herstellung phenolharzmodifizierter Bindemittel, welches sich durch seine Umweltfreundlichkeit gegenüber den bisher angewandten Methoden auszeichnet.

Es ist seit langem bekannt, daß durch Kondensation mit wärmereaktiven Phenolharzen vom Resoltyp das Eigenschaftsbild von Bindemitteln auf der Basis von ölfreien oder ölmodifizierten Polyesterharzen wesentlich verbessert werden kann. Dies gilt sowohl für lufttrocknende, wie auch für ofentrocknende Bindemittel.

Für die Herstellung solcher phenolharzmodifizierter Polyesterharze sind in der Literatur zahlreiche Ausführungsformen unter Verwendung von Resolen bzw. Novolaken aus den verschiedensten phenolischen Verbindungen vorgeschlagen worden.

So können einerseits die für den Aufbau des Polyesterharzes verwendeten ungesättigten Fettsäuren oder deren Triglyceride mit den Resolen kondensiert werden, andererseits auch die ungesättigte Fettsäurereste aufweisenden Polyester nachträglich mit den Resolen umgesetzt werden. Bei ölfreien Polyestern erfolgt, wie z. B. in der AT-PS 340 140 oder der DE-PS 1 920 180 beschrieben, die Kondensation über die vorhandenen freien Hydroxylgruppen. In der DE-PS 1 745 546 wird die Umsetzung von Resolen mit Epoxidgruppen tragenden Harzen beschrieben.

Bei allen diesen Verfahren erfolgt die Herstellung des Resols in einer eigenen Reaktionsstufe, was nicht nur eine eigene Produktionseinheit, sondern auch, bedingt durch die Umweltschutzgesetzgebung, aufwendige Maßnahmen, die Beseitigung der in beträchtlichen Mengen anfallenden Abwässer notwendig macht. Durch ihren Gehalt an niedermolekularen Phenol-Aldehyd-Kondensaten, organischen Lösungsmitteln und vor allem an organischen Salzen stellen diese Nebenprodukte der Resol-Herstellung für jedes diesen Kunstharztyp herstellende Unternehmen ein Problem dar.

In der US-PS 3 679 617 werden ungesättigte Öle in Gegenwart von Montmorillonit und Phosphorsäure mit Phenolen umgesetzt und das so modifizierte Öl mit Formaldehyd in Gegenwart von Aminen reagiert.

Gemäß AT-PS 304 723 werden ungesättigte Öle in Gegenwart von Oxalsäure mit Kohlenwasserstoffsubstituierten Phenolen und Formaldehyd umgesetzt und anschließend mit einer monoolefinischen Dicarbonsäure reagiert. Auf diese Weise werden Bindemittel erhalten, welche nach Neutralisation mit Basen wasserlöslich und besonders für das Elektrotauchlackierverfahren geeignet sind.

In beiden Fällen wird unzweifelhaft zunächst durch die sauren Katalysatoren eine Konjuenisierung eingeleitet. Die Phenole werden an diese Gruppierungen adduziert und reagieren in der Folge oder gleichzeitig mit dem Formaldehyd.

Es wurde nun gefunden, daß Phenole, insbesonders Alkylphenole ohne Verwendung eines sauren Katalysators an Hydroxyl- und Carboxylgruppen tragende, ölfreie oder ölmodifizierte Polyesterharze unter gleichzeitiger Reaktion mit Formaldehyd angelagert werden können.

Die vorliegende Erfindung betrifft demgemäß ein Verfahren zur Herstellung von nach Neutralisation mit Basen wasserlöslichen phenolharzmodifizierten Polyesterbindemitteln, welches dadurch gekennzeichnet ist, daß man

(A) ein gegebenenfalls mit trocknenden Ölen modifiziertes Polyesterharz mit einem mittleren Molekulargewicht von über 1500 und 0,3 bis 3 Hydroxyläquivalenten und 0,3 bis 3 Carboxyläquivalenten pro 1000 g Polyesterharz mit

(B) einem ein- oder mehrwertigen Phenol und/oder Alkyl- und/oder Arylphenol und/oder einer Phenolcarbonsäure,

(C) 0,5 bis 3 Mol eines Aldehyds pro Mol eingesetzter phenolischer Hydroxylgruppen

bei 60 bis 160° C mindestens bis zu einer bei einem pH-Wert zwischen 7 und 9 erzielbaren einwandfreien Wasserlöslichkeit einer mit Triäthylamin oder Ammoniak versetzten Probe reagiert.

Die erfindungsgemäß hergestellten Produkte haben eine besonders ausgeprägte Härtungstendenz und zeigen bei Verwendung als Bindemittel für Einbrennlacke hervorragende Filmeigenschaften. Durch ihren hohen Vernetzungsgrad und das Fehlen von sauren Katalysatorbestandteilen zeigen die Produkte eine besonders gute Sterilisationsfestigkeit und Widerstandsfähigkeit gegen aggressive Agentien. Aufgrund dieser Eigenschaften eignen sich die erfindungsgemäß hergestellten phenolmodifizierten Polyesterharze besonders für die Formulierung von Emballagenlacken und Lacken für die Innenlackierung von Konservendosen.

Die als Komponente (A) eingesetzten Polyesterharze müssen zur Erzielung optimaler Eigenschaften ein mittleres Molekulargewicht von mindestens 1500 aufweisen sowie jeweils 0,3 bis 3, vorzugsweise 0,8 bis 2 Hydroxyl- und Carboxyläquivalente pro 1000 g Polyester enthalten. Je nach Einsatzzweck können die Polyester ölfrei oder mit trocknenden oder nichttrocknenden Ölfettsäuren modifiziert sein. Die für die Herstellung dieser Polyester verwendbaren Rohstoffe sowie die Methoden zu ihrer Herstellung sind dem Fachmann bekannt.

Als Komponente (B) werden ein- oder mehrwertige Phenole, insbesonders deren Alkyl- und Arylderivate sowie Mischungen dieser Rohstoffe eingesetzt. Bevorzugte Phenole sind Monoalkylphenole, wie p-tert.Butylphenol, p-Cumylphenol, Nonylphenol oder Bisphenol A(1,1-Bis-4-hydroxyphenyl-propan). Die Menge des zur Umsetzung gelangenden Phenols kann in weitem Rahmen variiert werden und hängt wesentlich von den angestrebten Filmeigenschaften ab. Die vorzugsweise eingesetzten Mengen an dieser Komponente (B) liegen, bezogen auf das eingesetzte Polyesterharz, zwischen 0,5 und 50 Gew.-%, entsprechend einem Mengenverhältnis zwischen (A) und (B) von 100 : 0,5 und 100 : 50.

Besonders günstige Ergebnisse bezüglich der Resistenzeigenschaften der eingebrannten Filme gegen aggressive Lösungsmittel, wie Ketone, aromatische Kohlenwasserstoffe oder Ester werden bei teilweisem oder vollständigem Ersatz der genannten Phenole durch Phenolcarbonsäuren erzielt. Durch die damit erreichte verbesserte Löslichkeit der neutralisierten Harze in Wasser kann der für die Resistenzeigenschaften verantwortliche Phenolanteil noch wesentlich gesteigert werden. In diesem Fall können die Komponenten (A) und (B) in einem Gewichtsverhältnis von 100 : 50 bis 100 : 1000 eingesetzt werden, wobei ein gegebenenfalls vorhandener Anteil an ein- oder mehrwertigen Phenolen und/oder Alkyl- und/oder Arylphenolen höchstens bei 50 Gew.-% der Komponente (B) liegt.

Geeignete Phenolcarbonsäuren sind bespielsweise 4,4-Bis-(4-hydroxyphenyl)-pentansäure, Glykolsäurederivate von Diphenolen, wie das 2-(4-Hydroxyphenyl)-2-(carbäthoxyphenyl)-propan oder Salicylsäure. Voraussetzung für die Verwendbarkeit dieser Phenolcarbonsäuren ist die Möglichkeit der Reaktion mit Aldehyden unter Bildung von hitzehärtenden Produkten. Gegebenenfalls können auch die Umsetzungsprodukte der Phenolcarbonsäuren mit Adlehyden (Resolcarbonsäuren) ganz oder anteilig anstelle der Phenolcarbonsäuren in äquivalenten Gewichtsmengen in Reaktion gebracht werden. In diesem Fall kann die Menge des eingesetzten Aldehyds entsprechend vermindert werden.

Als Aldehyde (Komponente C) können die in der Phenolharzchemie üblichen Rohstoffe eingesetzt werden. Vorzugsweise gelangt Formaldehyd zur Verwendung. Die Menge des eingesetzten Aldehyds beträgt 0,5 bis 3 Mol pro Mol phenolischer Hydroxylgruppen im Ansatz.

Die Umsetzung der Komponenten kann bei 60 bis 160°C erfolgen. Vorzugsweise wird bei 100 bis 130°C gearbeitet. Die Reaktion wird mindestens so weit geführt, daß eine Probe, welche mit so viel Triäthylamin oder Ammoniak versetzt wird, daß ihre wäßrige Lösung einen pH-Wert zwischen 7 und 9 aufweist, einwandfrei mit Wasser weiterverdünnbar ist. Die Umsetzung der Komponenten ist mit einer Viskositätssteigerung verbunden. Vorteilhafterweise wird die Kondensation bis nahe an den Gelierpunkt herangeführt; um ein Optimum der Filmeigenschaften zu erreichen.

Die Reaktionsprodukte werden in organischen Lösungsmitteln, wie aromatischen oder aliphatischen Kohlenwasserstoffen, Glykoläthern, Alkoholen oder Ketonen gelöst und können auch in dieser Lösung verarbeitet werden. Bei einer Verarbeitung in wäßriger Lösung werden sie zur besseren Verarbeitbarkeit in wassertoleranten Lösungsmitteln gelöst.

In einer besonderen Ausführungsform kann zur Herstellung wasserlöslicher Bindemittel die Reaktion der Komponenten auch nach vorhergehender partieller oder vollständiger Neutralisation der Carboxylgruppen der Reaktionspartner mit organischen Aminen, insbesonders tertiären oder sekundären Alkylaminen erfolgen. Die Produkte fallen dann unmittelbar in ihrer wasserlöslichen Form an.

Die Applikation der Lacke auf Basis der erfindungsgemäß hergestellten Bindemittel kann durch Tauchen, Spritzen, Walzen oder Fluten erfolgen. Wäßrige Zusammensetzungen können auch im ETL-Verfahren aufgebracht werden. Für dieses Auftragsverfahren werden im Interesse guter Verträglichkeitseigenschaften und einer befriedigenden Badstabilität Produkte bevorzugt, deren Viskosität in 50%iger Lösung in Äthylenglykolmonobutyläther unter 150 Sekunden (DIN 53 211/20°C) liegt.

Die folgenden Beispiele erläutern die Erfindung. Alle Mengen- und Prozentangaben beziehen sich, sofern nichts anderes angegeben ist, auf Gewichtseinheiten. Die Bestimmung der Viskosität erfolgt in allen Fällen nach DIN 53 211 bei 20°C.

## Beispiel 1

118 Teile Hexandiol-1,6 und 25 Teile Isophthalsäure werden bei 160°C unter azeotroper Entfernung des Reaktionswassers mittels Methylisobutylketon bis zu einer Säurezahl von ca. 60 mg KOH/g verestert. Nach Abziehen des Lösungsmittels unter Vakuum werden 90 Teile Trimellithsäure zugegeben und eine Temperatur von 145°C etwa 2 Stunden gehalten. bis die Viskosität einer 50%igen Lösung in Äthylenglykolmonobutyläther 40 Sekunden erreicht hat. Nach Kühlen auf 120°C werden 80 Teile p-ter.Butylphenol und 38 Teile Paraformaldehyd (91%) zugesetzt. Das zuerst inhomogene Gemisch wird im Laufe der Reaktion klar. Man erhält eine Temperatur von 120°C bis die Viskosität einen Wert von 120 Sekunden erreicht hat. Dann wird mit Diäthylenglykoldimethyläther auf einen Festkörpergehalt von 80% verdünnt. Das Harz ist nach Zugabe von Triäthylamin bei einem pH-Wert von 9 unbeschränkt wasserlöslich.

Ein Klarlack wird durch Verdünnen des neutralisierten Harzes mit Wasser auf 50 Gew.-% hergestellt. Ein 15 Minuten bei 200°C eingebrannter Film ist hochelastisch und sterilisationsfest und daher hervorragend zur Konservendosenlackierung geeignet.

## Beispiel 2

160 Teile dehydratisiertes Rizinusöl, 140 Teile Leinöl, 50 Teile Kolofonium und 6 g Pentaerythrit werden unter Verwendung von Toluol als Schleppmittel für das Reaktionswasser bei 250°C bis zu einer Säurezahl von weniger als 5 mg KOH/g verestert. Mit dem gebildeten Ester werden 100 Teile Maleinsäureanhydrid möglichst vollständig verestert und anschließend bei 120°C 70 Teile Äthylenglykol, 70 Teile Trimethylolpropan und 20 Teile Wasser zugesetzt und die Reaktionspartner 5 Stunden bei 150°C unter Rückfluß umgeestert.

Der Polyester wird bei 120°C mit 75 Teilen p-tert.Butylphenol, 15 Teilen Bisphenol und 45 Teilen Paraformaldehyd (91%ig) versetzt und bei 110°C so lange reagiert, bis eine Probe nach Neutralisation mit einer konzentrierten wäßrigen Ammoniaklösung unbeschränkt wasserlöslich ist. Die Temperatur des Ansatzes wird dann auf 150°C gesteigert, bis die Viskosität einer 50%igen Lösung in Monoäthylenglykolmonobutyläther auf 120—130 Sekunden gestiegen ist. Anschließend wird das Harz mit Monoäthylenglykolmonobutyläther auf einen Festkörpergehalt von 80% verdünnt und nach Kühlen auf unter 40°C mit einer konzentrierten wäßrigen Ammoniaklösung auf einen pH-Wert (gemessen in der 30%igen wäßrigen Lösung) von 7,5 eingestellt.

Das Harz ist unbeschränkt wasserlöslich und ergibt nach Auftrag auf ein entfettetes Stahlblech mit 30-minütigem Einbrennen bei 160°C einen glänzenden Film mit ausgezeichneten mechanischen Eigenschaften und ausgezeichneter Resistenz gegen chemische Angriffe.

## Beispiel 3

95 Teile Hexandiol-1,6, 27 Teile Trimethylolpropan und 25 Teile Isophthalsäure werden bei 160°C bis zu einer Säurezahl von 56 mg KOH/g verestert. Nach Zugabe von 88 Teilen Trimellithsäureanhydrid wird die Veresterung bei 145 bis 150°C weitergeführt.

100 Teile dieses Polyesters werden bei 110°C mit 100 Teilen Paraformaldehyd (91%), 25 Teilen p-tert.Butylphenol, 25 Teilen Bisphenol A und 100 Teilen 2-(4-Hydroxyphenyl)-2-(carbäthoxyphenyl)-propan versetzt und bei 110°C bis 120°C so lange kondensiert, bis eine Probe des Harzes nach Neutralisation mit Triäthylamin wasserverdünnbar geworden ist. Nach Verdünnen des Ansatzes auf einen Festkörpergehalt von 80% und Neutralisation der Carboxylgruppen mit Triäthylamin wird der Ansatz weitere 6 Stunden bei 60°C gehalten, um die noch freien Formaldehydreste weitgehend zu binden.

Nach Verdünnen der Harzlösung mit Wasser auf 35% erhält man einen lagerstabilen Klarlack, welcher auf entfettetes Stahlblech aufgebracht wird. Nach dem Aushärten (15 Min. 200°C) zeigt der Film eine ungewöhnliche Resistenz gegen Lösungsmittel:

| | Nach Wochen | | | | |
| --- | --- | --- | --- | --- | --- |
| | 1 | 2 | 4 | 8 | 16 |
| Aceton | i.O. | i.O. | i.O. | i.O. | i.O. |
| 96% Äthanol | i.O. | i.O. | i.O. | i.O. | i.O. |
| Superbenzin | i.O. | i.O. | i.O. | i.O. | i.O. |
| 10% Essigsäure | i.O. | i.O. | i.O. | i.O. | i.O. |

i.O. = in Ordnung, ohne sichtbaren Angriff

## Beispiel 4

220 Teile des gemäß Beispiel 3 hergestellten Polyesters werden mit 20 Teilen Paraformaldehyd (91%) und 144 Teilen p-tert.Butylphenol so lange bei 110°C gerührt, bis eine klare Lösung entstanden ist. Anschließend werden 13 Teile Bisphenol A zugegeben und die Temperatur von 110°C gehalten, bis eine Viskosität von 50 Sekunden (gemessen als 50%ige Lösung in Äthylenglykolmonobutyläther) erreicht ist. Die Säurezahl liegt dabei zwischen 90 und 110 mg KOH/g.

100 Teile dieses Kondensationsproduktes werden mit 330 Teilen einer 67%igen Lösung in Wasser/Butanol eines Formaldehydkondensationsproduktes von 2-(4-Hydroxyphenyl)-2-(carbäthoxyphenyl)-propan (hergestellt gemäß AT-PS 198 858 aus Bisphenol A und Monochloressigsäure) bei 95 bis 99°C bis zur Erreichung einer Viskosität von 110 bis 120°C reagiert. Das Produkt wird mit Äthylenglykolmonobutyläther auf einen Festkörpergehalt von 80% verdünnt. Die Lösung ist nach Neutralisation mit Triäthylamin unbegrenzt mit Wasser verdünnbar. Die gemäß den in Beispiel 3 angegebenen Bedingungen erhaltenen Klarlackfilme zeigen ebenfalls die dort gezeigten Resistenzeigenschaften.

## Patentansprüche

1. Verfahren zur Herstellung von nach Neutralisation mit Basen wasserlöslichen phenolharzmodifizierten Polyesterharzbindemitteln, dadurch gekennzeichnet, daß man

(A) ein gegebenenfalls mit trocknenden Ölen modifiziertes Polyesterharz mit einem mittleren Molekulargewicht von über 1500 und 0,3 bis 3 Hydroxyläquivalenten und 0,3 bis 3 Carboxyläquivalenten pro 1000 g Polyesterharz mit

(B) einem ein- oder mehrwertigen Phenol und/oder Alkyl- und/oder Arylphenol und/oder einer Phenolcarbonsäure,

(C) 0,5 bis 3 Mol eines Aldehyds pro Mol eingesetzter phenolischer Hydroxylgruppen

bei 60 bis 160°C mindestens bis zu einer bei einem pH-Wert zwischen 7 und 9 erzielbaren einwandfreien Wasserlöslichkeit einer mit Triäthylamin oder Ammoniak versetzten Probe reagiert.

2. Verfahren nach Anspruch 1, dadurch gekennzeichnet, daß als Komponente (A) ein Polyesterharz, welches pro 1000 g je 0,8 bis 2 Hydroxyl- und Carboxyläquivalente aufweise, eingesetzt wird.

3. Verfahren nach den Ansprüchen 1 und 2, dadurch gekennzeichnet, daß man 100 Gew.-Teile des Polyesterharzes (A) mit 0,5 bis 50 Gew.-Teilen eines ein- oder mehrwertigen, gegebenenfalls alkyl- oder arylsubstituierten Phenols umsetzt.

4. Verfahren nach den Ansprüchen 1 und 2, dadurch gekennzeichnet, daß man 100 Gew.-Teile des Polyesterharzes (A) mit 50 bis 1000 Gew.-Teilen einer Phenolcarbonsäure, gegebenenfalls unter Mitverwendung von höchstens 50 Gew.-% ein- oder mehrwertiger Phenole und/oder Alkyl- und/oder Arylphenole, umsetzt.

5. Verfahren nach Anspruch 4, dadurch gekennzeichnet, daß man anstelle der Phenolcarbonsäuren ganz oder teilweise die entsprechenden Resolcarbonsäuren einsetzt.

6. Verfahren nach den Ansprüchen 1 bis 5, dadurch gekennzeichnet, daß man die Reaktion zwischen den Komponenten (A), (B) und (C) bei 100 bis 130°C durchführt.

7. Verfahren nach den Ansprüchen 1 bis 6, dadurch gekennzeichnet, daß man die Umsetzung der Komponenten (A), (B) und (C) nach vorhergehender partieller oder vollständiger Neutralisation der Carboxylgruppen der Komponente (A) mit organischen Aminen, vorzugsweise tertiären oder sekundären Alkylaminen durchführt.

8. Verfahren nach den Ansprüchen 1 bis 7, dadurch gekennzeichnet, daß man als Aldehyd (C) Formaldehyd einsetzt.

9. Verwendung der nach den Ansprüchen 1 bis 8 hergestellten Bindemittel in unpigmentierter Form in wärmehärtenden, nach Neutralisation wasserverdünnbaren Lacken.

10. Verwendung der nach den Ansprüchen 1 bis 8 hergestellten Bindemittel in Emballagenlacken oder Konservendosenlacken.

## Claims

1. Process for producing phenolic resin modified polyester resin binders water soluble upon neutralisation with bases, characterised in that

(A) a polyester resin, optionally modified with drying oils, having an average molecular weight of above 1500 and 0.3 to 3 hydroxy equivalents and 0.3 to 3 carboxy equivalents in 1000 g of polyester resin, and

(B) a mono- or polyvalent phenol and/or alkyl and/or aryl phenol and/or a phenol carboxylic acid, and

(C) 0.5 to 3 moles of an aldehyde per mole of phenolic hydroxy group,

are reacted at 60 to 160°C at least to a satisfactory water dilutability of a sample blended with triethylamine or ammonia and having a pH-value of between 7 and 9.

2. Process according to claim 1, characterised in that as component (A) a polyester resin is used which contains in 1000 g each 0.8 to 2 hydroxy and carboxy equivalents.

3. Process according to claims 1 and 2, characterised in that 100 parts by weight of polyester resin (A) are reacted with 0.5 to 50 parts by weight of a mono- or polyvalent phenol, optionally substituted with alkyl or aryl.

4. Process according to claims 1 and 2, characterised in that 100 parts by weight of polyester resin (A) are reacted with 50 to 1000 parts by weight of a phenol carboxylic acid, optionally coemploying a maximum of 50% by weight of monoor polyvalent phenols and/or alkyl and/or aryl phenols.

5. Process according to claim 4, characterised in that in place of the phenol carboxylic acids, totally or in part, the corresponding resol carboxylic acids are used.

6. Process according to claims 1 to 5, characterised in that the reaction between components (A), (B) and (C) is carried out at 100 to 130°C.

7. Process according to claims 1 to 6, characterised in that the reaction of components (A), (B) and (C) is carried out after partial or total neutralisation of the carboxy groups of component (A) with organic amines, preferably tertiary or secondary alkylamines.

8. Process according to claims 1 to 7, characterised in that formaldehyde is used as aldehyde (C).

9. Use of the binders prepared according to claims 1 to 8 in nonpigmented form in heat hardenable paints, water dilutable after neutralisation.

10. Use of the binders prepared according to claims 1 to 8 in paints for drums and food cans.

## Revendications

1. Procédé de préparation de liants consistant en résines de polyesters modifiées par des résines phénoliques, solubles dans l'eau après neutralisation par des bases, caractérisé en ce que l'on fait réagir à une température de 60 à 160°C, au moins jusqu'à ce qu'un échantillon additionné de triéthyla-mine ou d'ammoniac soit parfaitement soluble dans l'eau à un pH entre 7 et 9,

(A) une résine de polyester éventuellement modifiée par des huiles siccatives, ayant un poids moléculaire moyen supérieur à 1500 et conténant 0,3 à 3 équivalents de groupes hydroxyles et 0,3 à 3 équivalents de groupes carboxyles pour 1000 g de résine de polyester avec

(B) un phénol et/ou alkyl- et/ou aryl-phénol monoou poly-valent et/ou un acide phénol-carboxylique,

(C) 0,5 à 3 moles d'un aldéhyde par mole de groupe hydroxy phénolique mis en oeuvre.

2. Procédé selon la revendication 1, caractérisé en ce que l'on utilise en tant que composant (A) une résine de polyester contenant de 0,8 à 2 équivalents de groupes hydroxy et de 0,8 à 2 équivalents de groupes carboxyles pour 1000 g.

3. Procédé selon les revendications 1 et 2, caractérisé en ce que l'on fait réagir 100 parties en poids de la résine de polyester (A) avec 0,5 à 50 parties en poids d'un phénol mono- ou poly-valent éventuellement alkyl- ou aryl-substitué.

4. Procédé selon les revendications 1 et 2, caractérisé en ce que l'on fait réagir 100 parties en poids de la résine de polyester (A) avec 50 à 1000 parties en poids d'un acide phénol-carboxylique, avec utilisation conjointe éventuelle d'au maximum 50% en poids de phénols et/ou alkyl- et/ou aryl-phénols mono- ou poly-valents.

5. Procédé selon la revendication 4, caractérisé en ce que, à la place des acides phénol-carboxyliques, on utilise en totalité ou en partie les acides résole-carboxyliques correspondents.

6. Procédé selon les revendications 1 à 5 caractérisé en ce que l'on effectue la réaction entre les composants (A), (B) et (C) à une température de 100 à 130°C.

7. Procédé selon les revendications 1 à 6, caractérisé en ce que l'on effectue la réaction entre les composants (A), (B) et (C) après neutralisation partielle ou complète des groupes carboxyles du composant (A) par des amines organiques, de préférence par des alkylamines tertiaires ou secondaires.

8. Procédé selon les revendications 1 à 7, caractérisé en ce que l'on utilise en tant qu'aldéhyde (C) le formaldéhyde.

9 . Application des liants préparés selon les revendications 1 à 8, à l'étant non pigmenté, dans des vernis thermodurcissables diluables par l'eau après neutralisation.

10. Application des liants préparés selon les revendications 1 à 8 dans des vernis pour emballages ou des vernis pour boîtes de conserve.